# EUROPEAN PATENT APPLICATION

(11) **EP 4 491 485 A1**
(43) Date of publication of application: **15.01.2025**
(21) Application number: 24181128.0
(22) Date of filing: 10.06.2024
(51) Int. Cl.: B60W 60/00

(54) **AUTONOMOUS DRIVING SYSTEM AND CONTROL METHOD**

(30) Priority: 10.07.2023 JP 2023113110
(71) Applicant: TOYOTA JIDOSHA KABUSHIKI KAISHA, Aichi-ken 471-8571 (JP)
(72) Inventor: OHSUGI, Masamichi, Tokyo, 103-0022 (JP); URANO, Hiromitsu, Tokyo, 103-0022 (JP)
(74) Representative: J A Kemp LLP

(57) **Abstract**

The present disclosure relates to an autonomous driving system (100) mounted on a vehicle (1). The autonomous driving system (100) comprises a storage device and one or more processors (110). The one or more processors (110) are configured to execute acquiring recognition data by recognizing a situation around the vehicle (1), generating a path plan (PLN) for the vehicle (1) based on the recognition data, performing autonomous driving control of the vehicle (1) in accordance with the path plan (PLN), and storing a data log related to the autonomous driving control in the storage device. The data log includes a log of data used for generating the path plan (PLN). Generating the path plan (PLN) includes acquiring a remaining capacity of the storage device, generating target data being the recognition data with reduced accuracy, and generating the path plan (PLN) that can be generated using the target data when the remaining capacity is equal to or less than a predetermined amount.

## Description

### BACKGROUND

### Field

The present disclosure relates to a technique for storing a record of data related to autonomous driving of a vehicle.

### Background Art

Patent Literature 1 discloses a traffic system that includes a plurality of nodes and is capable of communication between the plurality of nodes. The traffic system calculates a collision risk between a target node and a target object using information transmitted and received between nodes.

As a document indicating a technical level at the time of filing in the technical field of the present disclosure or a technical field related thereto, Patent Literature 2 can be exemplified in addition to Patent Literature 1.

### List of Related Art

Patent Literature 1: JP2021-149162A
Patent Literature 2: JP2020-021326A

### SUMMARY

A technique for performing autonomous driving control of a vehicle using a machine learning model is known. As a method for verifying the autonomous driving control of the vehicle after the traveling, it is considered to store a data log related to the autonomous driving control in an in-vehicle storage device. However, a capacity of the in-vehicle storage device has a limitation. Therefore, it is desirable to avoid a situation in which necessary data cannot be stored due to occurrence of capacity shortage.

An object of the present disclosure is to provide a technique that can prevent a capacity of an in-vehicle storage device from becoming insufficient in advance and appropriately store a data log related to autonomous driving control.

The first aspect of the present disclosure relates to an autonomous driving system mounted on a vehicle. The autonomous driving system comprises one or more storage devices and one or more processors. The one or more processors are configured to execute acquiring recognition data by recognizing a situation around the vehicle, generating a path plan for the vehicle based on the recognition data, performing autonomous driving control of the vehicle in accordance with the path plan, and storing a data log related to the autonomous driving control in the one or more storage devices. The data log includes a log of data used for generating the path plan. Generating the path plan includes acquiring a remaining capacity of the one or more storage devices. Generating the path plan also includes generating target data that is the recognition data with reduced accuracy and generating the path plan that can be generated using the target data in a case where the remaining capacity is equal to or less than a predetermined amount.

The second aspect of the present disclosure relates to a control method for controlling autonomous driving of a vehicle. The control method includes acquiring recognition data by recognizing a situation around the vehicle, generating a path plan for the vehicle based on the recognition data, performing autonomous driving control of the vehicle in accordance with the path plan, and storing a data log related to the autonomous driving control in a storage device. The data log includes a log of data used for generating the path plan. Generating the path plan includes acquiring a remaining capacity of the storage device. Generating the path plan also includes generating target data that is the recognition data with reduced accuracy and generating the path plan that can be generated using the target data in a case where the remaining capacity is equal to or less than a predetermined amount.

According to the technique of the present disclosure, the remaining capacity of the one or more storage devices is acquired. Then, when the remaining capacity is equal to or less than the predetermined amount, the target data is generated by reducing accuracy of the recognition data and the path plan that can be generated using the target data with the reduced accuracy is generated. By reducing accuracy of the recognition data, volume of data to be newly stored can be reduced. Thus, the remaining capacity can be preserved, and a situation in which data that should be stored cannot be stored can be prevented in advance.

As described above, according to the present disclosure, it is possible to prevent a situation in which the remaining capacity of the one or more storage devices becomes insufficient and appropriately store a data log related to autonomous driving control.

### BRIEF DESCRIPTION OF THE DRAWINGS

Fig. 1 is a block diagram showing an example of a configuration related to autonomous driving control of a vehicle according to an embodiment.
Fig. 2 is a conceptual diagram showing an example of a configuration of an autonomous driving system according to the embodiment.
Fig. 3 is a conceptual diagram for explaining a specific example of processing for reducing accuracy of target data.
Fig. 4 is a flowchart for explaining an example of processing according to the embodiment.

### DETAILED DESCRIPTION

### 1. Autonomous Driving of Vehicle

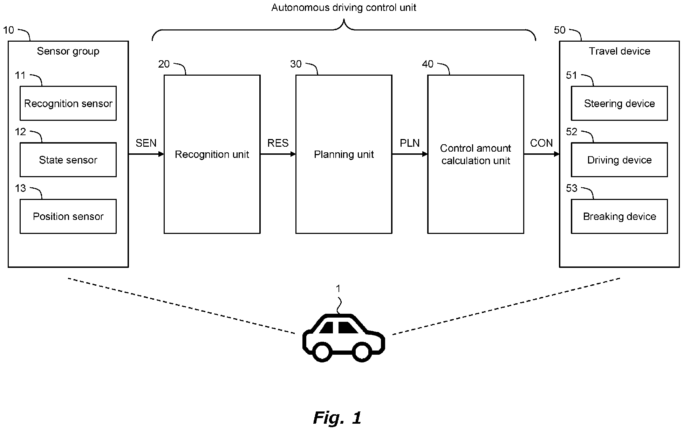

Fig. 1 is a block diagram showing a configuration example related to autonomous driving control of a vehicle 1 according to a present embodiment. Autonomous driving is automatically performing at least one of steering, acceleration, and deceleration of the vehicle 1 without depending on driving operation by an operator. The autonomous driving control is a concept including not only complete autonomous driving control but also risk avoidance control, lane keep assist control, and the like. The operator may be a driver on board the vehicle 1 or may be a remote operator who remotely operates the vehicle 1.

The vehicle 1 includes a sensor group 10, a recognition unit 20, a planning unit 30, a control amount calculation unit 40, and a travel device 50.

The sensor group 10 includes a recognition sensor 11 used for recognizing a situation around the vehicle 1. Examples of the recognition sensor 11 include a camera, a laser imaging detection and ranging (LIDAR), and a radar. The sensor group 10 may further include a state sensor 12, which detects a state of the vehicle 1, a position sensor 13, which detects a position of the vehicle 1, and the like. Examples of the state sensor 12 include a speed sensor, an acceleration sensor, a yaw rate sensor, and a steering angle sensor. As the position sensor 13, a global navigation satellite system (GNSS) sensor is exemplified.

Sensor detection information SEN is information acquired by the use of the sensor group 10. For example, the sensor detection information SEN includes an image captured by the camera, point group information acquired by the LIDAR. The sensor detection information SEN may include vehicle state information indicating the state of the vehicle 1. The sensor detection information SEN may include position information indicating the position of the vehicle 1.

The recognition unit 20 receives the sensor detection information SEN. The recognition unit 20 recognizes the situation around the vehicle 1 based on the information acquired by the recognition sensor 11. For example, the recognition unit 20 recognizes an object around the vehicle 1. Examples of the object include a pedestrian, another vehicle (e.g., a preceding vehicle, a parked vehicle, and the like), a white line, a road structure (e.g., a guard rail, a curb, and the like), a fallen object, a traffic light, an intersection, and a sign. Recognition result information RES indicates a result of recognition by the recognition unit 20. For example, the recognition result information RES includes object information indicating a relative position and a relative speed of the object with respect to the vehicle 1.

The planning unit (planner) 30 receives the recognition result information RES from the recognition unit 20. In addition, the planning unit 30 may receive the vehicle state information, the position information, and map information generated in advance. The map information may be high-precision three dimensional map information. The planning unit 30 generates a path plan PLN of the vehicle 1 for traveling along a predetermined travel route based on the received information. The travel route is, for example, input in advance by the operator of the vehicle 1. As another example, the destination of the vehicle 1 may be input by the operator and the planning unit 30 may determine the travel route to the input destination.

The path plan PLN includes maintaining a currently traveling lane, changing lanes, overtaking, turning right or left, steering, accelerating, decelerating, stopping, and the like. Further, the path plan PLN performed by the planning unit 30 may include a travel trajectory of the vehicle 1. The travel trajectory includes a target position and a target speed in a road in which the vehicle 1 travels.

The control amount calculation unit 40 receives the path plan PLN from the planning unit 30. The control amount calculation unit 40 calculates a control amount CON required for the vehicle 1 to travel in accordance with the path plan PLN. When the path plan PLN includes the travel trajectory, it can also be said that the control amount CON is a control amount required for reducing a deviation of the vehicle 1 from the target trajectory. The control amount CON includes at least one of a steering control amount, a driving control amount, and a braking control amount. Examples of the steering control amount include a target steering angle, a target torque, a target motor angle, and a target motor drive current. Examples of the driving control amount include a target speed and a target acceleration. Examples of the braking control amount include a target speed and a target deceleration.

The travel device 50 includes a steering device 51, a driving device 52, and a braking device 53. The steering device 51 steers wheels of the vehicle 1. For example, the steering device 51 includes an electric power steering (EPS) device. The driving device 52 is a power source that generates a driving force. Examples of the driving device 52 include an engine, an electric motor, and an in-wheel motor. The braking device 53 generates a braking force. The travel device 50 receives the control amount CON from the control amount calculation unit 40. The travel device 50 operates the steering device 51, the driving device 52, and the braking device 53 in accordance with the steering control amount, the driving control amount, and the braking control amount, respectively. Thus, the vehicle 1 travels in accordance with the path plan PLN.

The recognition unit 20 includes at least one of a rule-based model and a machine learning model. The rule-based model performs a recognition process based on a predetermined rule group. Examples of the machine learning model include a neural network (NN), a support vector machine (SVM), a regression model, and a decision tree model. The NN may be a convolutional neural network (CNN), a recurrent neural network (RNN), or a combination of CNN and RNN. The type of each layer, the number of layers, and the number of nodes in the NN are arbitrary. The machine learning model is generated in advance through machine learning. The recognition unit 20 performs the recognition process by inputting the sensor detection information SEN into the model. The recognition result information RES is output from the model or generated based on the output from the model.

Similarly, the planning unit 30 also includes at least one of a rule-based model and a machine learning model. The planning unit 30 performs a planning process by inputting the recognition result information RES into the model. The path plan PLN is output from the model or generated based on the output from the model.

Similarly, the control amount calculation unit 40 also includes at least one of a rule-based model and a machine learning model. The control amount calculation unit 40 performs a control amount calculation process by inputting the path plan PLN into the model. The control amount CON is output from the model or generated based on the output from the model.

Two or more of the recognition unit 20, the planning unit 30, and the control amount calculation unit 40 may have an integrated architecture. All of the recognition unit 20, the planning unit 30, and the control amount calculation unit 40 may have an integrated architecture (End-to-End architecture). For example, the recognition unit 20 and the planning unit 30 may have an integrated architecture based on an NN that outputs the path plan PLN from the sensor detection information SEN. Even in the case of the integrated architecture, intermediate products such as the recognition result information RES or the path plan PLN may be output. For example, in a case where the recognition unit 20 and the planning unit 30 have an integrated architecture based on an NN, the recognition result information RES may be an output from an intermediate layer of the NN.

The recognition unit 20, the planning unit 30, and the control amount calculation unit 40 constitute an "autonomous driving control unit" that controls autonomous driving of the vehicle 1.

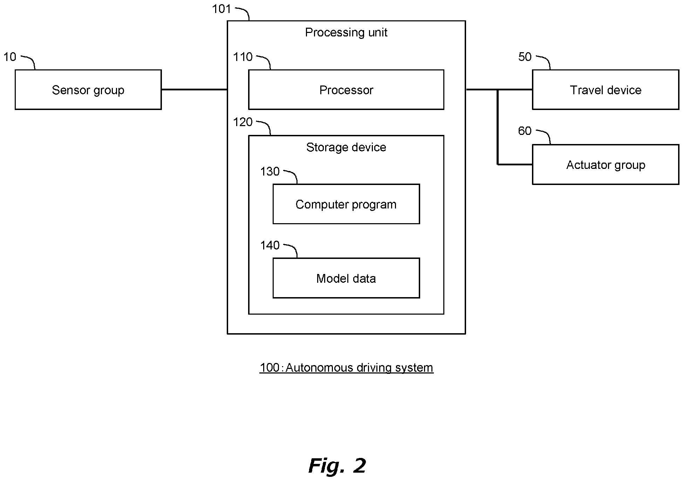

Fig. 2 is a block diagram showing an example of a hardware configuration of an autonomous driving system 100 according to the present embodiment. The autonomous driving system 100 has at least the function of the above-described autonomous driving control unit.

The autonomous driving system 100 includes a processing unit 101, the sensor group 10, the travel device 50, and an actuator group 60. The processing unit 101 is configured to be able to communicate with the sensor group 10, the travel device 50, and the actuator group 60.

The processing unit 101 is a computer including one or more processors 110 (hereinafter, simply referred to as a processor 110 or processing circuitry) and one or more storage devices 120 (hereinafter, simply referred to as a storage device 120).

The processor 110 executes various processes. Examples of the processor 110 include a central processing unit (CPU), a graphics processing unit (GPU), an application specific integrated circuit (ASIC), and a field-programmable gate array (FPGA). The recognition unit 20, the planning unit 30, and the control amount calculation unit 40 may be implemented by a single processor 110 or may be respectively implemented by separate processors 110. The storage device 120 stores various kinds of information. Examples of the storage device 120 include a hard disk drive (HDD), a solid state drive (SSD), a volatile memory, and a non-volatile memory.

The storage device 120 stores a computer program 130 and model data 140.

The computer program 130 is executed by the processor 110. Various processes by the autonomous driving system 100 are implemented by a cooperation of the processor 110 which executes the computer program 130 and the storage device 120. The computer program 130 may be recorded on a computer-readable storage medium.

The model data 140 is data of a model included in the recognition unit 20, the planning unit 30, and the control amount calculation unit 40. The model data 140 is stored in the storage device 120. The processor 110 selects a model from the model data 140 and uses it in execution of the autonomous driving function, thereby configuring the recognition unit 20, the planning unit 30, and the control amount calculation unit 40.

The actuator group 60 includes actuators of various devices included in the vehicle 1. For example, the actuator group 60 includes a vibration actuator for vibrating a steering wheel and a reaction torque actuator for generating a reaction torque on the steering wheel. The actuator group 60 is configured to be controllable by the processing unit 101.

### 2. Processing by Processor

Processes implemented by the processor 110 executing the computer program 130 includes a recognition data acquisition process, path plan generation process, and data log storage process.

The processor 110 acquires recognition data by the recognition data acquisition process. The recognition data is data obtained by the processor 110 recognizing the situation around the vehicle 1. That is, the recognition data mentioned here is data related at least one of the recognition sensor information and the recognition result information RES.

The processor 110 generates a path plan PLN of the vehicle 1 based on the recognition data by the path plan generation process. The path plan generation process is executed by the planning unit 30.

The processor 110 stores a data log related to the autonomous driving control in the storage device 120 by the data log storage process. The stored data log includes a log of data used for generating the path plan PLN.

The path plan generation process includes a remaining capacity acquisition process. The processor 110 acquires a remaining capacity of the storage device 120 by the remaining capacity acquisition process.

In a case where the remaining capacity acquired as a result of the remaining capacity acquisition process is equal to or less than a predetermined amount, the processor 110 generates data which is the recognition data with reduced accuracy in the path plan generation process. Hereinafter, the recognition data with reduced accuracy is referred to as target data.

In addition, when the remaining capacity acquired by the remaining capacity acquisition process is equal to or less than the predetermined amount, the processor 110 generates the path plan PLN which can be generated using the target data in the path plan generation process.

The effect of the above processes is described. The data log is stored by the data log storage process in preparation for a case where it becomes necessary to verify later how the autonomous driving control using the machine learning model is performed or the like. Therefore, it is desirable that all data log of data used for generating the path plan PLN among the recognition data is stored without being selected.

However, if the remaining capacity of the storage device 120 decreases and becomes insufficient for a required capacity, the processor 110 cannot newly store data in the storage device 120. The remaining capacity acquisition process is performed to prevent such a situation.

That is, when the remaining capacity becomes equal to or less than the predetermined amount and the possibility of the capacity shortage is suggested, the path plan PLN is generated by using the target data, which is data with reduced accuracy. The target data is data of which the data log is stored. In other words, volume of the data log which newly stored in the storage device 120 can be reduced by reducing volume of data of which the data log becomes a target to be stored. In this way, the remaining capacity of the storage device 120 can be preserved and a situation in which the remaining capacity becomes insufficient and the recognition data used for generating the path plan PLN cannot be stored can be prevented in advance.

In addition, in a case where the remaining capacity is low, the path plan PLN which can be generated using the target data is generated. Specifically, the path plan PLN in which a margin regarding the control of the vehicle 1 is larger than that in a usual condition is generated. By generating the path plan PLN in which the margin is larger than that in the usual condition, it is possible to secure safety of traveling of the vehicle 1 even in a case where the target data is used.

The target data is generated when the remaining capacity of the storage device 120 becomes equal to or less than the predetermined amount. That is, in a scene where the remaining capacity of the storage device 120 is sufficient and it is not required that the remaining capacity is preserved, the path plan PLN is generated using the recognition data with usual accuracy. Therefore, it is not necessary to set a limit to the path plan PLN of the vehicle 1 in order to keep the margin, and it is possible to maintain satisfaction of an occupant of the vehicle 1.

### 3. Process of Generating Target Data

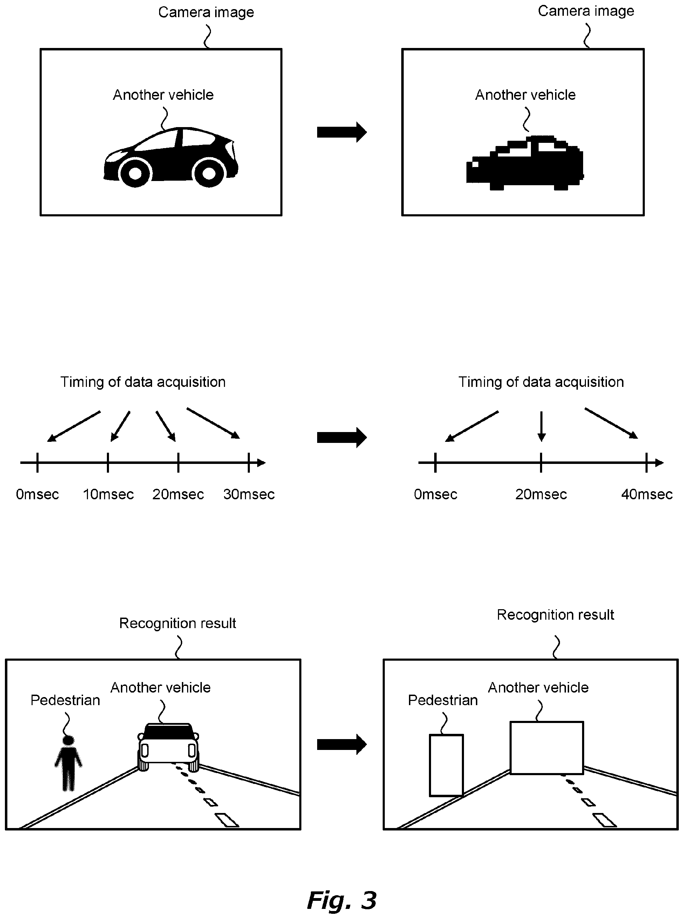

Fig. 3 shows three specific examples of a process of generating the target data, that is, a process of reducing accuracy of the recognition data.

In the first example, a resolution of the recognition data is reduced. The resolution indicates density of information included in the recognition data. For example, when the recognition data is the image captured by the camera, reducing the resolution means reducing the number of pixels or dots constituting the image. As another example, in a case where the recognition data is the point group information acquired by the LIDAR, reducing the resolution means reducing density of points constituting the point group.

In the second example, a sampling rate of the recognition data is reduced. For example, in a case where the recognition data is information acquired by the recognition sensor 11, at least one of a detection frequency of the recognition sensor 11 and an acquisition frequency of information by the recognition unit 20 from the recognition sensor 11 is reduced. As another example, a frequency at which the planning unit 30 acquires the recognition result information RES from the recognition unit 20 may be reduced.

In the third example, representation of the recognition data, that is, how to represent information in the recognition data is changed. More specifically, representation of the recognition data is changed to the representation with a higher abstraction degree. For example, information about other vehicles and pedestrians indicated by the object information in the recognition result information RES is changed from detailed information including shapes of other vehicles and pedestrians to information representing other vehicles and pedestrians by bounding boxes. As another example, a case is assumed that the object information in the recognition result information RES includes information about a curb existing outside a lane in which the vehicle 1 travels. In this case, for example, the object information is changed from detailed information including a position and a height of the curb to information indicating only the presence of the curb.

That is, generating the target data can also be reworded to making the recognition data rough data. By reducing accuracy of the recognition data and making the data rough, data volume can be reduced. For example, in a case where the resolution of the recognition data is reduced, an amount of information per unit area is reduced, and thus volume of data acquired when the same target is recognized decreases. As another example, in a case where the sampling rate of the recognition data is reduced, an amount of information per unit time is reduced, and thus volume of data acquired in the same time decreases. As still another example, in a case where the representation of the recognition data is changed to the representation with a high abstraction degree, volume of acquired data decreases. For example, data volume of information indicating only the presence of the curb is smaller than that of information including the detailed position of the curb. By reducing volume of the newly acquired data in this way, the remaining capacity of the storage device 120 can be preserved and a situation in which the remaining capacity becomes insufficient can be prevented in advance.

In addition, when generating the target data, the processor 110 generates the path plan PLN which can be generated using the target data. When the target data is used, there is a possibility that an error of the recognition sensor information or the recognition result information RES increases. Therefore, in order to make it possible to cope with an increase in an error of the recognition sensor information or the recognition result information RES, the processor 110 generates the path plan PLN of the vehicle 1 such that the vehicle 1 travels with a larger margin than that in the usual condition.

For example, when the target data is used, the processor 110 generates the path plan PLN in which a following distance to the preceding vehicle is set to be larger than that in the usual condition. As another example, in a scene in which the vehicle 1 needs to be decelerated, the processor 110 generates the path plan PLN such that the deceleration is started at earlier timing than usual. As still another example, the processor 110 generates the path plan PLN such that the number of times of lane change of the vehicle 1 is smaller than that in the usual condition. As still another example, in a scene where the vehicle 1 travels in a curved road, the processor 110 generates the path plan PLN such that the vehicle 1 travels in the middle of the lane when using the target data even if the vehicle travels close the left or right side of the lane to perform efficient traveling in usual.

### 4. Example of Processing

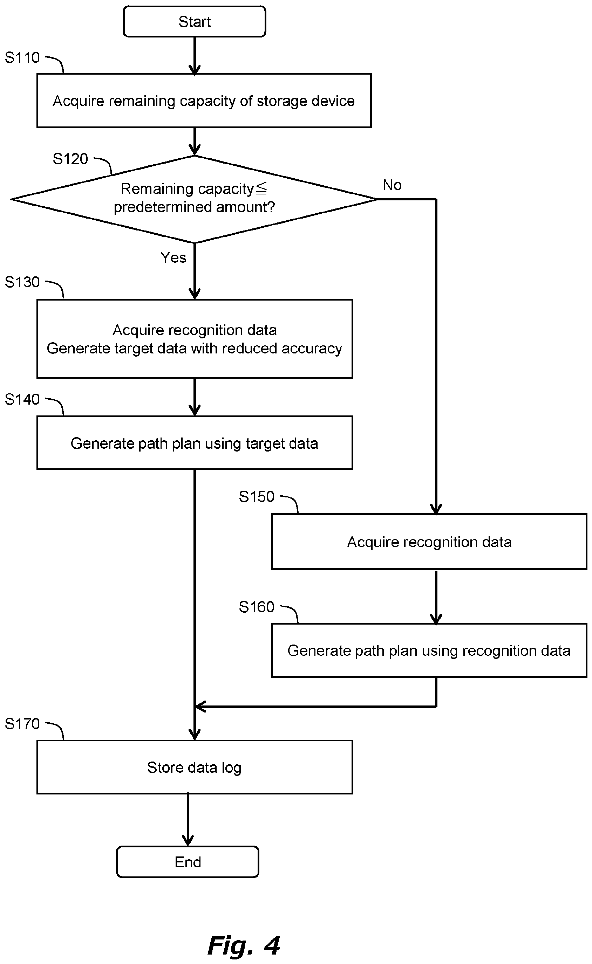

Fig. 4 is a flowchart showing an example of processing executed by the processor 110. The processing according to the flowchart shown in Fig. 4 is, for example, repeatedly executed at a predetermined processing cycle while the autonomous driving control is performed.

In Step S110, the processor 110 acquires the remaining capacity of the storage device 120.

Then, in Step S120, the processor 110 determines whether the remaining capacity of the storage device 120 acquired in Step S110 is equal to or less than the predetermined amount or not.

When it is determined that the remaining capacity is equal to or less than the predetermined amount (Step S120; Yes), the processing proceeds to Step S130. On the other hand, when it is determined that the remaining capacity is larger than the predetermined amount (Step S120; No), the processing proceeds to Step S150.

In step S130, the processor 110 acquires the recognition data. Further, the processor 110 generates the target data used for generating the path plan PLN by reducing the accuracy of the recognition data. More specifically, the processor 110 performs at least one of reducing the resolution, reducing the sampling rate, and changing the representation regarding the acquired recognition data.

Then, in Step S140, the processor 110 generates the path plan PLN based on the target data generated in Step S130. In Step S140, the processor 110 generates the path plan PLN which can be generated using the target data. Specifically, the processor 110 generates the path plan PLN so as to provide a margin for the control of the vehicle 1.

On the other hand, in Step S150, the processor 110 acquires the recognition data. It is the same as in Step S130 that the recognition data is acquired. However, in Step S150, the target data is not generated, that is, accuracy of the recognition data is not reduced.

Then, in Step S160, the processor 110 generates the path plan PLN based on the recognition data acquired in Step S150. Here, the path plan PLN is generated as usual. That is, a margin in the control of the vehicle 1 is not increased.

After the process of Step S140 or Step S160 is executed, the processing proceeds to Step S170. In Step S170, the processor 110 stores the data log of data used for generating the path plan PLN in the storage device 120. After Step S170, the processing ends.

### 5. Application Example

The data log stored by the data log storage process is used for verification of autonomous driving control using the machine learning model or the like, and thus the data log particularly required to be stored is a data log of data which is input to a portion to which the machine learning model is applied. Therefore, it is more appropriate to set the recognition data whose accuracy is reduced as data to be input to a portion to which the machine learning model is applied. For example, in a case where the machine learning model is applied only to the recognition unit 20, it is more appropriate that the recognition data whose accuracy is reduced in the path plan generation process is set as the recognition sensor information, which is input to the recognition unit 20.

In addition, the recognition data whose accuracy is reduced by the processor 110 when the remaining capacity of the storage device 120 is equal to or less than the predetermined amount may be limited to data related to generation of the travel trajectory in a road. The recognition data related to the generation of the travel trajectory in the road is, for example, a recognition result related to an object around the vehicle 1. For example, the processor 110 recognizes an obstacle in front of the vehicle 1 and generates the travel trajectory for avoiding the obstacle on the basis of the recognition result. When the remaining capacity of the storage device 120 is equal to or less than the predetermined amount, accuracy of the recognition data related to the generation of the travel trajectory like this may be reduced.

At least a part of the processor 110 may be a processor included in a server outside the vehicle 1. A part or all of the processing shown in the flowchart of Fig. 4 may be executed by the server outside the vehicle 1.

## Claims

1. An autonomous driving system (100) mounted on a vehicle (1), comprising one or more storage devices (120) and one or more processors (110), wherein
the one or more processors (110) are configured to execute:
acquiring recognition data by recognizing a situation around the vehicle (1);
generating a path plan (PLN) for the vehicle (1) based on the recognition data;
performing autonomous driving control of the vehicle (1) in accordance with the path plan (PLN); and
storing a data log related to the autonomous driving control in the one or more storage devices (120),
the data log includes a log of data used for generating the path plan (PLN), and generating the path plan (PLN) includes:
acquiring a remaining capacity of the one or more storage devices (120); and
generating target data that is the recognition data with reduced accuracy and generating the path plan (PLN) that can be generated using the target data in a case where the remaining capacity is equal to or less than a predetermined amount.

2. The autonomous driving system (100) according to claim 1, wherein generating the target data includes at least one of reducing a resolution of the recognition data, reducing a sampling rate of the recognition data, and changing representation of the recognition data.

3. The autonomous driving system (100) according to claim 1 or 2, wherein generating the path plan (PLN) includes generating a travel trajectory for the autonomous driving control in a road in which the vehicle (1) travels.

4. A control method for controlling autonomous driving of a vehicle (1), the control method comprising:
acquiring recognition data by recognizing a situation around the vehicle (1);
generating a path plan (PLN) for the vehicle (1) based on the recognition data;
performing autonomous driving control of the vehicle (1) in accordance with the path plan (PLN); and
storing a data log related to the autonomous driving control in a storage device, and
the data log includes a log of data used for generating the path plan (PLN), and
generating the path plan (PLN) includes:
acquiring a remaining capacity of the storage device; and
generating target data that is the recognition data with reduced accuracy and generating the path plan (PLN) that can be generated using the target data in a case where the remaining capacity is equal to or less than a predetermined amount.
